# EUROPEAN PATENT APPLICATION

(11) **EP 2 733 409 A1**
(43) Date of publication of application: **21.05.2014**
(21) Application number: 12193097.8
(22) Date of filing: 16.11.2012
(51) Int. Cl.: F16M 13/02

(54) **Fixing device**

(71) Applicant: Keysheen Industry (Shanghai) Co., Ltd., Qingpu Industry Zone Shanghai 201703 (CN)
(72) Inventor: Liu, Lausan, Shanghai (CN); Liu, Shopo, Shanghai (CN); Liu, Fibro, Shanghai (CN)
(74) Representative: Chaillot, Geneviève

(57) **Abstract**

A fixing device includes a first buckling assembly, a second buckling assembly and a pin. The first buckling assembly includes a main body, and a plurality of first holes is formed on the main body. A first arm and a second arm are disposed on the main body. A first fixing component is movably disposed on the first arm. The second arm has a fixing surface. The first fixing component buckles the first object with the fixing surface. The second buckling assembly includes an annular body, and a connecting arm is disposed on an end of the annular body. A second hole is formed on the connecting arm. A second fixing component is movably disposed on the other end of the annular body. The second fixing component buckles the second object with the main body. The pin detachably pierces through one of the first holes and the second hole.

## Description

### Background of the Invention

### 1. Field of the Invention

The present invention relates to a fixing device, and more particularly, to a fixing device capable of fixing relative positions of a first object and a second object.

### 2. Description of the Prior Art

A sunshade umbrella is popularly used in the beach and the outdoor café. A sunshade umbrella is conventionally fixed on the ground by a base. The base is a heavy structure put on the ground, a hole is formed on a center of the base, and a shaft of the sunshade umbrella inserts into the hole for steady. The base is further a tube disposed on the desk or on the chair, and the shaft of the sunshade umbrella inserts into the hole on the tube for the steady.

However, a dimension of the hole for the sunshade umbrella is predetermined, so that a dimension of the shaft is necessary to conform to the predetermined dimension of the hole. Further, the base is heavy to prevent the sunshade umbrella from falling, so that the conventional base for the sunshade umbrella has drawbacks of inconvenience and expensive cost. If the base is disposed on the desk or the chair, it is usually not capable of being disassembled even if the sunshade umbrella is removed. Thus, the conventional base for the sunshade umbrella further has an inartistic drawback.

### Summary of the Invention

The present invention provides a fixing device utilizing a first buckling assembly and a second buckling assembly to fix relative positions of a first object and a second object.

According to the claimed invention, a fixing device includes a first buckling assembly, a second buckling assembly and a pin. The first buckling assembly includes a main body, and a plurality of first holes is formed on the main body. A first arm and a second arm are disposed on the main body. A first fixing component is movably disposed on the first arm. The second arm has a fixing surface. The first fixing component buckles the first object with the fixing surface. The second buckling assembly includes an annular body, and a connecting arm is disposed on an end of the annular body. A second hole is formed on the connecting arm and corresponds to the first holes. A second fixing component is movably disposed on the other end of the annular body and corresponds to the main body. The second fixing component buckles the second object with the main body. The pin detachably pierces through one of the first holes and the second hole, so that the annular body is connected to the main body in a detachable manner.

According to the claimed invention, the connecting arm includes a first connecting arm and a second connecting arm, the first connecting arm is opposite to the second connecting arm, the second hole is formed on the first connecting arm and the second connecting arm, the main body is disposed between the first connecting arm and the second connecting arm.

According to the claimed invention, a slot is formed on the main body, the first holes are formed inside the slot, at least one of the first connecting arm and the second connecting arm includes a protrusion, the second hole penetrates through the protrusion, a shape of the protrusion corresponds to a shape of the slot, and the protrusion is accommodated inside the slot.

According to the claimed invention, a lateral wall is disposed on a boundary of the slot, a structural direction of the lateral wall is perpendicular to the main body.

According to the claimed invention, the slot stretches along a first direction, and the first holes are arranged inside the slot along the first direction.

According to the claimed invention, the slot further stretches along a second direction, and the first holes are arranged inside the slot along the second direction.

According to the claimed invention, the first direction is perpendicular to the second direction.

According to the claimed invention, the pin includes a pillar, an engaging component is disposed on an end of the pillar, an opening is formed on a side of the second hole on the second connecting arm opposite the main body, the pillar pierces through one of the first holes and the second hole, the engaging component pierces through the opening and contacts against a boundary of the opening.

According to the claimed invention, the engaging component includes a long axle and a short axle, the opening has a first width and a second width, the first width is substantially equal to or greater than a length of the long axle, the second width is substantially equal to or greater than a length of the short axle and is smaller than the length of the long axle, two ends of the long axle of the engaging component contact against the boundary of the opening.

According to the claimed invention, the first fixing component includes a first rod and a press plank, a third hole is formed on the first arm, the first rod is movably disposed inside the third hole, the press plank is connected to the first rod and located between the first arm and the second arm, the press plank corresponds to the fixing surface.

According to the claimed invention, the first rod includes an outer thread structure, an inner thread structure is disposed inside the third hole, and the outer thread structure corresponds to the inner thread structure.

According to the claimed invention, the second fixing component includes a second rod and a press body, a fourth hole is formed on the annular body, the second rod is movably disposed inside the fourth hole, the press body is connected to the second rod, the press body corresponds to the main body.

According to the claimed invention, the second rod includes an outer thread structure, an inner thread structure is disposed inside the fourth hole, and the outer thread structure corresponds to the inner thread structure.

According to the claimed invention, two press pillars are respectively disposed on two sides of the press body, a fifth hole is formed on the press body and between the two press pillars, the fifth hole aligns with the fourth hole at an axial direction, the two press pillars are disposed on two opposite sides of the annular body, the second rod pivots to the press body via the fifth hole, the main body comprises a side wall, ends of the two press pillars respectively comprise press portions facing the side wall, the press portion corresponds to the side wall.

According to the claimed invention, the side wall includes a first sunken surface, the press portion includes a second sunken surface, and the first sunken surface symmetrically corresponds to the second sunken surface.

The fixing device of the present invention includes the adjustable first buckling assembly and the adjustable second buckling assembly, the relative positions of the first buckling assembly and the second buckling assembly can be adjusted by user's demand, so that the present invention has preferred convenience and application.

These and other objectives of the present invention will no doubt become obvious to those of ordinary skill in the art after reading the following detailed description of the preferred embodiment that is illustrated in the various figures and drawings.

### Brief Description of the Drawings

FIG.1 is an exploded diagram of the fixing device according to a preferred embodiment of the present invention.
FIG.2 is a diagram of the pin according to a preferred embodiment of the present invention.
FIG.3 is a diagram of the annular body of the second buckling assembly according to a preferred embodiment of the present invention.
FIG.4 is a diagram of the main body of the first buckling assembly according to a preferred embodiment of the present invention.
FIG.5 is a diagram of the first fixing component according to a preferred embodiment of the present invention.
FIG.6 is a diagram of the second fixing component according to a preferred embodiment of the present invention.
FIG.7 is a diagram of a first mode of the fixing device according to a preferred embodiment of the present invention.
FIG.8 is a diagram of a second mode of the fixing device according to a preferred embodiment of the present invention.

### Detailed Description

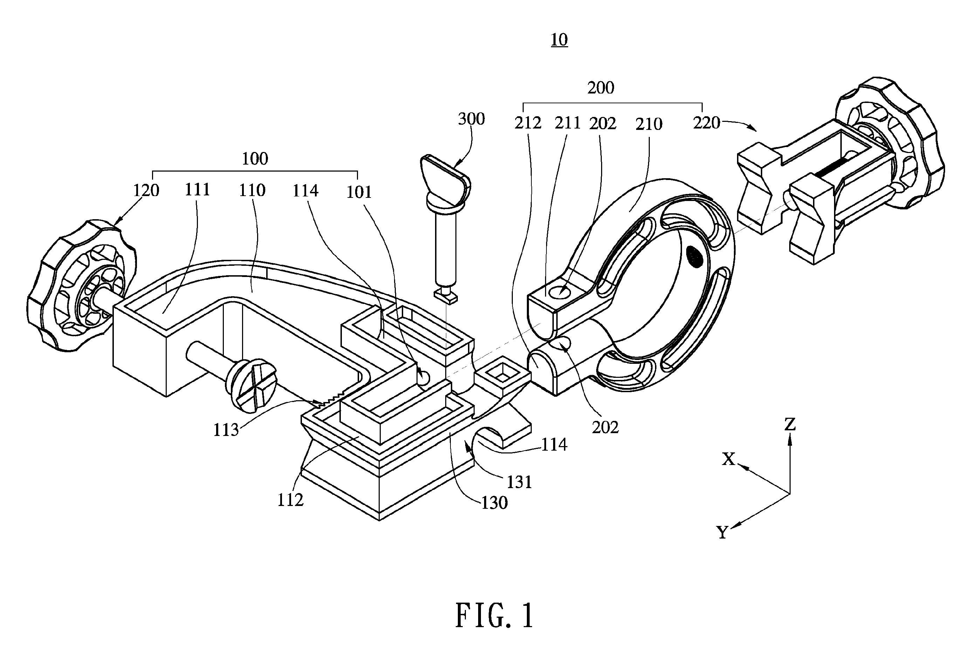

Please refer to FIG.1. FIG.1 is an exploded diagram of a fixing device 10 according to a preferred embodiment of the present invention. The fixing device 10 is suitable for connecting a first object to a second object (not shown in figure), and further for fixing relative positions of the first object and the second object. The fixing device 10 includes a first buckling assembly 100, a second buckling assembly 200 and a pin 300. The first buckling assembly 100 includes a main body 110, and a first arm 111 and a second arm 112 are disposed on the main body 110. The first arm 111 corresponds to the second arm 112. A first fixing component 120 is movably disposed on the first arm 111. The second arm 112 includes a fixing surface 113, the first fixing component 120 corresponds to the fixing surface 113, and the first fixing component 120 can buckle the first object with the fixing surface 113. For example, the first object can be a boundary of the desk or a top of the handrail.

The second buckling assembly 200 includes an annular body 210. An end of the annular body 210 is connected to the main body 110. A second fixing component 220 is movably disposed on the other end of the annular body 210. The second fixing component 220 corresponds to the main body 110. The second fixing component 220 can buckle the second object with the main body 110, for example, the second object can be a central shaft of an umbrella. In this embodiment, the annular body 210 is detachably connected to the main body 110 via the pin 300, which means the first buckling assembly 100 can be assembled and disassembled from the second buckling assembly 200. In the other embodiment, the annular body and the main body are fixed and unable to be disassembled, or the annular body is integrated with the main body monolithically.

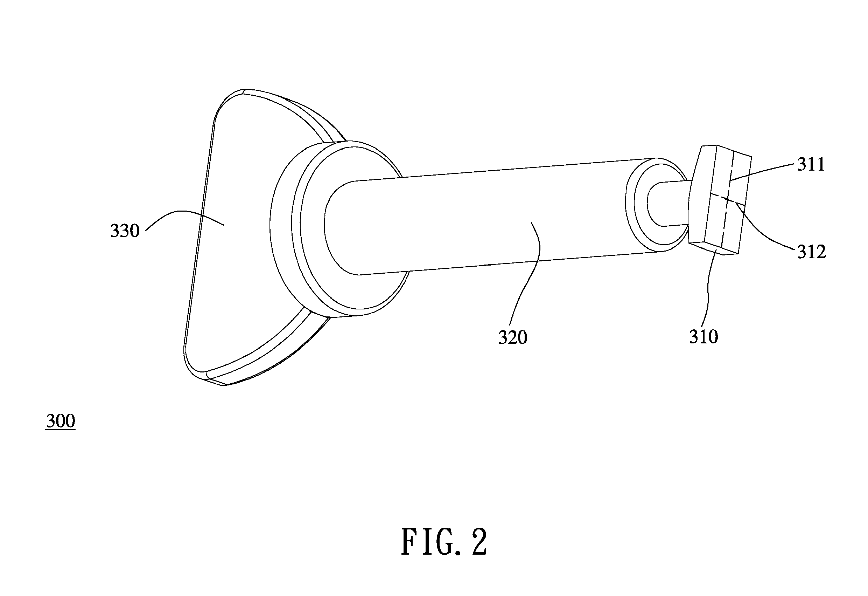

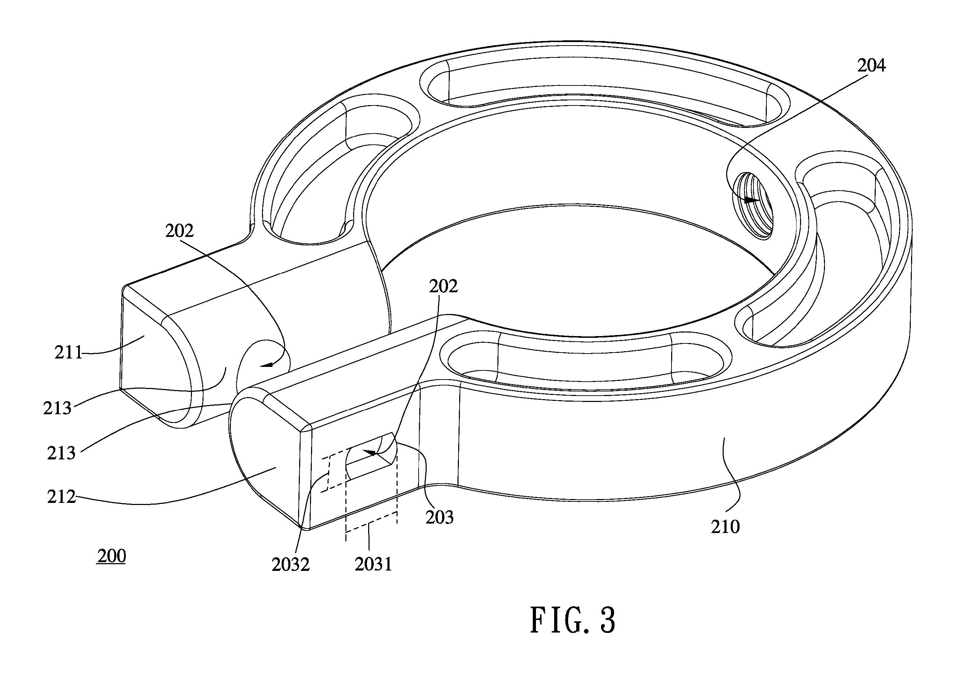

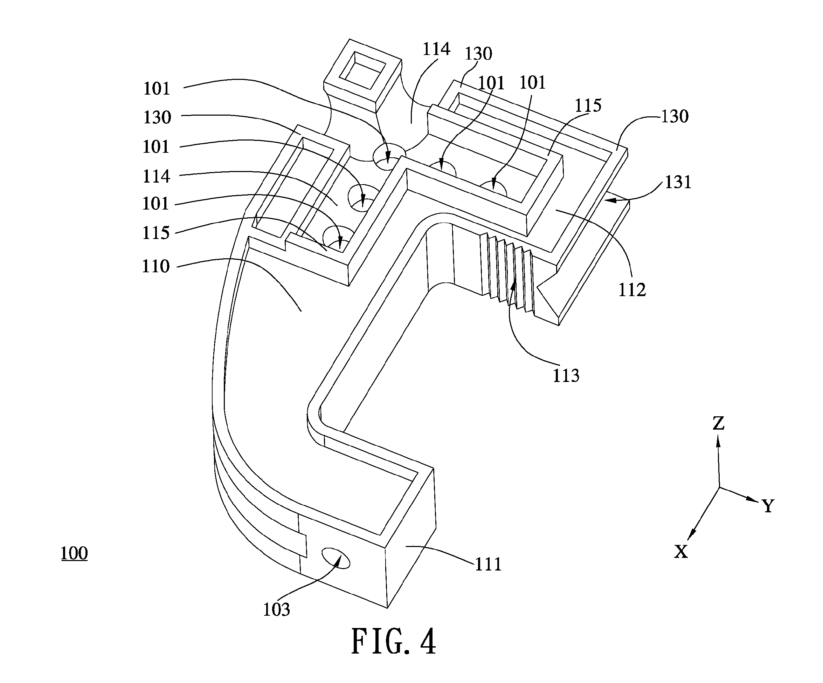

Please refer to FIG.1 to FIG.4. FIG.2 is a diagram of the pin 300 according to a preferred embodiment of the present invention. FIG.3 is a diagram of the annular body 210 of the second buckling assembly 200 according to a preferred embodiment of the present invention. FIG.4 is a diagram of the main body 110 of the first buckling assembly 100 according to a preferred embodiment of the present invention. Two slots 114 are formed on two lateral surfaces of the main body 110. The two slots 114 are opposite and symmetric with each other. A plurality of first holes 101 is formed on the main body 110, and the first holes 101 are located inside the slot 114. The first hole 101 pierces through the slots 114 on the main body 110. The slots 114 respectively stretch along a first direction and a second direction. In the embodiment, the first direction equals X direction, the second direction equals Y direction, and X direction is perpendicular to Y direction. The first holes 101 are formed inside the slot 114 along X direction and Y direction, respectively.

A connecting arm is disposed on an end of the annular body 210. The connecting arm includes a first connecting arm 211 and a second connecting arm 212. The first connecting arm 211 is opposite to the second connecting arm 212. The first connecting arm 211 and the second connecting arm 212 respectively have protrusions 213 facing to each other. A shape of the protrusion 213 corresponds to a shape of the slot 114, and a distance between the two protrusions 213 is equal to a thickness between the slots 114 on the main body 110. Thus, the two protrusions 213 can be respectively accommodated inside the two slots 114, which means the main body 110 can be held between the first connecting arm 211 and the second connecting arm 212. In addition, a combination of the protrusion 213 and the slot 114 can constrain a relative movement between the main body 110 and the annular body 210 along X-Y direction. A lateral wall 115 is disposed on the boundary of the slot 114, and a structural direction of the lateral wall 115 is perpendicular to the main body 110. In the embodiment, the lateral wall 115 stretches along Z direction. The lateral wall 115 corresponds to a lateral side of the first connecting arm 211 and the second connecting arm 212, and can be helpful to constrain the relative movement between the main body 110 and the annular body 210 along X-Y direction. In the other embodiment, the protrusion can be alternatively disposed on the first connecting arm or the second connecting arm, and the slot can be formed on a lateral surface of the main body corresponding to the said protrusion.

Second holes 202 are respectively formed on the first connecting arm 211 and the second connecting arm 212. The second hole 202 penetrates through the protrusion 213. The plurality of first holes 101 corresponds to the second holes 202. It is to say, the second holes 202 formed on the first connecting arm 211 and the second connecting arm 212 can axially align with one of the first holes 101 selectively, so that the pin 300 can pass into the first hole 101 and the second hole 202, which have axially aligned with each other.

The pin 300 includes an engaging component 310, a pillar 320 and a handle 330. The engaging component 310 is disposed on an end of the pillar 320, and the handle 330 is disposed on a top of the pillar 320. In the embodiment, the engaging component 310 is a rectangle structure, which includes a long axle 311 and a short axle 312. The pillar 320 corresponds to the first hole 101 and the second hole 202. The pillar 320 can pass into the first hole 101 and the second hole 202, which have axially aligned with each other. An opening 203 is formed on the other side of second hole 202 on the second connecting arm 212 opposite the main body 110. When the pillar 320 completely passes into the first hole 101 and the second hole 202, the engaging component 310 can protrude from the opening 203 and contact against a boundary of the opening 203.

In the embodiment, the opening 203 is rectangle, and has a first width 2031 and a second width 2032. The first width 2031 is substantially equal to a length of the long axle 311. The second width 2032 is substantially equal to a length of the short axle 312 and smaller than the length of the long axle 311. Two ends of the long axle 311 of the engaging component 310 contact against the boundary of the opening 203. In the other embodiment, the first width can be greater than the length of the long axle, and the second width is greater than the length of the short axle and smaller than the length of the long axle. Further, when the pillar 320 passes into the second hole 202 on the second arm 212, the long axle 311 of the engaging component 310 can align with a direction of the first width 2031 of the opening 203 by rotating the pillar 320 with the handle 330. Then, the engaging component 310 completely passes through the opening 203, and the pillar 320 can rotate to contact the two ends of the long axle 311 of the engaging component 310 against the boundary of the opening 203. Therefore, the pin 300, the annular body 210 and the main body 110 can be engaged with each other, and relative movement between the first buckling assembly 100 and the second buckling assembly 200 is fixed at X, Y and Z direction.

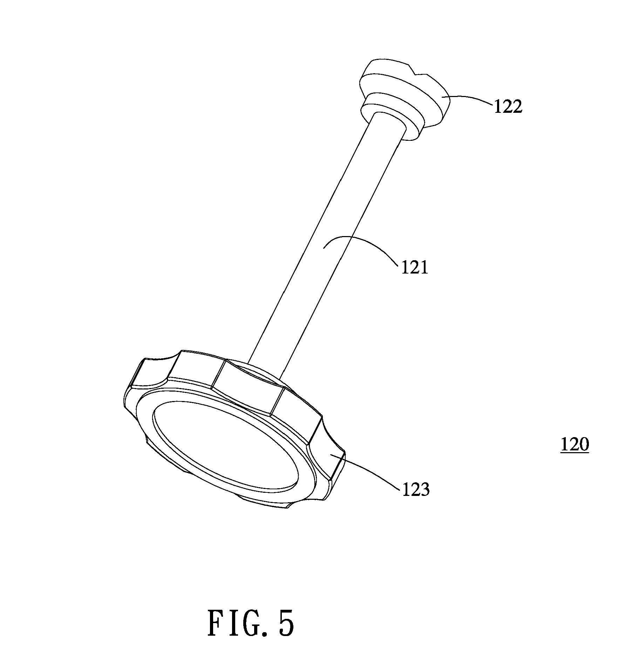

Please refer to FIG.4 and FIG.5. FIG.5 is a diagram of the first fixing component 120 according to a preferred embodiment of the present invention. The first fixing component 120 includes a first rod 121, a press plank 122 and a handle 123. A third hole 103 is formed on the first arm 111. The first rod 121 is movably disposed inside the third hole 103. The handle 123 is connected to an end of the first rod 121. The press plank 122 is connected to the other end of the first rod 121 and located between the first arm 111 and the second arm 112. The press plank 122 corresponds to the fixing surface 113. The first rod 121 includes an outer thread structure, an inner thread structure is disposed inside the third hole 103 (not shown in figure). The outer thread structure corresponds to the inner thread structure. For rotating the handle 123 in a clockwise direction or in a counterclockwise direction, the outer thread structure of the first rod 121 can be matched with the inner thread structure of the third hole 103, the first rod 121 can move relative to the third hole 103, and the press plank 122 can move toward or be separated from the fixing surface 113. Therefore, the first fixing component 120 can buckle the first object according to a thickness of the first object, so as to fix the first object stably.

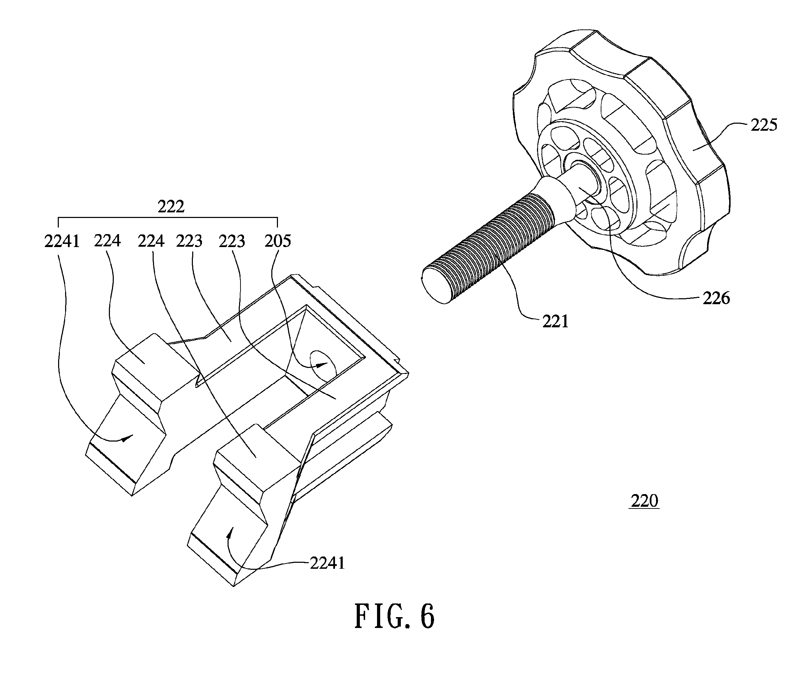

Please refer to FIG.1, FIG.3 and FIG.6. FIG.6 is a diagram of the second fixing component 220 according to a preferred embodiment of the present invention. The second fixing component 220 includes a second rod 221, a press body 222, a handle 225 and a neck 226. The neck 226 is connected to the second rod 221 and the handle 225. Two press pillars 223 are respectively disposed on two sides of the press body 222. A fifth hole 205 is formed on the press body 222 between the two press pillars 223, and the fifth hole 205 corresponds to the neck 226. The neck 226 can pivot to the fifth hole 205. Thus, a degree of rotary freedom exists between the second rod 221 and the handle 225 relative to the press body 222.

A fourth hole 204 is formed on the other end of the annular body 210 relative to the connecting arm. The fifth hole 205 axially aligns with the fourth hole 204. The second rod 221 passes into the fifth hole 205 and the fourth hole 204 in sequence, and is movably disposed inside the fourth hole 204. At the time, the twp press pillars 223 are disposed on two sides of the annular body 210. The second rod 221 includes the outer thread structure, the inner thread structure is formed inside the fourth hole 204. The outer thread structure corresponds to the inner thread structure. For rotating the handle 225 in the clockwise direction or in the counterclockwise direction, the outer thread structure of the second rod 221 can be matched with the inner thread structure of the fourth hole 204, so that the second rod 221 can move relative to the fourth hole 204. As directions shown in FIG.1, the handle 225 and the second rod 221 can move along Y direction, the press pillar 223 can move along Y direction by the handle 225 and the second rod 221. When the handle 225 and the second rod 221 rotates along X direction and Z direction, the annular body 210 blocks the press pillar 223, so as to constrain a rotation of the press pillar 223 at X direction and Z direction.

The main body 110 includes a side wall 130. The press pillar 223 includes a press portion 224 disposed on the end of the press pillar 223, and the press portion 224 faces the side wall 130. The press portion 224 corresponds to the side wall 130. The side wall 130 includes a first sunken surface 131, and the press portion 224 includes a second sunken surface 2241. The first sunken surface 131 symmetrically corresponds to the second sunken surface 2241. The second sunken surface 2241 can be driven by the handle 225 and the second rod 221, so as to move toward or to be separated from the first sunken surface 131 for buckling and releasing the second obj ect. In addition, the first sunken surface 131 and the second sunken surface 2241 are inner oblique structures inclining from side to the center, so that the first sunken surface 131 and the second sunken surface 2241 can be utilized to buckle the pillar. Besides, a distance between the first sunken surface 131 and the second sunken surface 2241 not only can be adjusted by rotating the handle 225, but also can be adjusted by connection of the suitable first hole 101.

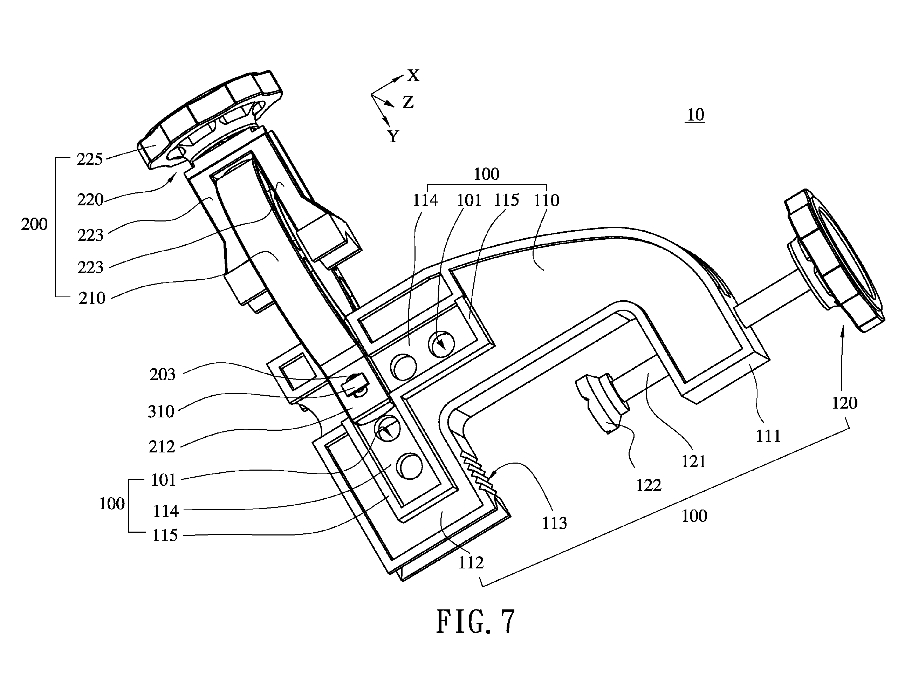

Please refer to FIG.1 and FIG.7. FIG.7 is a diagram of a first mode of the fixing device 10 according to a preferred embodiment of the present invention. The first buckling assembly 100 and the second buckling assembly 200 of the fixing device 10 are substantially perpendicular to each other. The first connecting arm 211 and the second connecting arm 212 of the annular body 210 insert into the slots 114 on the main body 110 along Y direction, and the annular body 210 is fixed on the main body 110 by the pin 300. The fixing device 10 can fix the umbrella on the desk easily. For example, the first buckling assembly 100 is utilized to be set on the desk, and the first fixing component 120 is adjusted to steady the fixing device 10 on the boundary of the desk. Then, the central shaft of the umbrella passes through a hollow portion of the annular body 210 of the second buckling assembly 200, and the second fixing component 220 is adjusted to tightly fix the shaft.

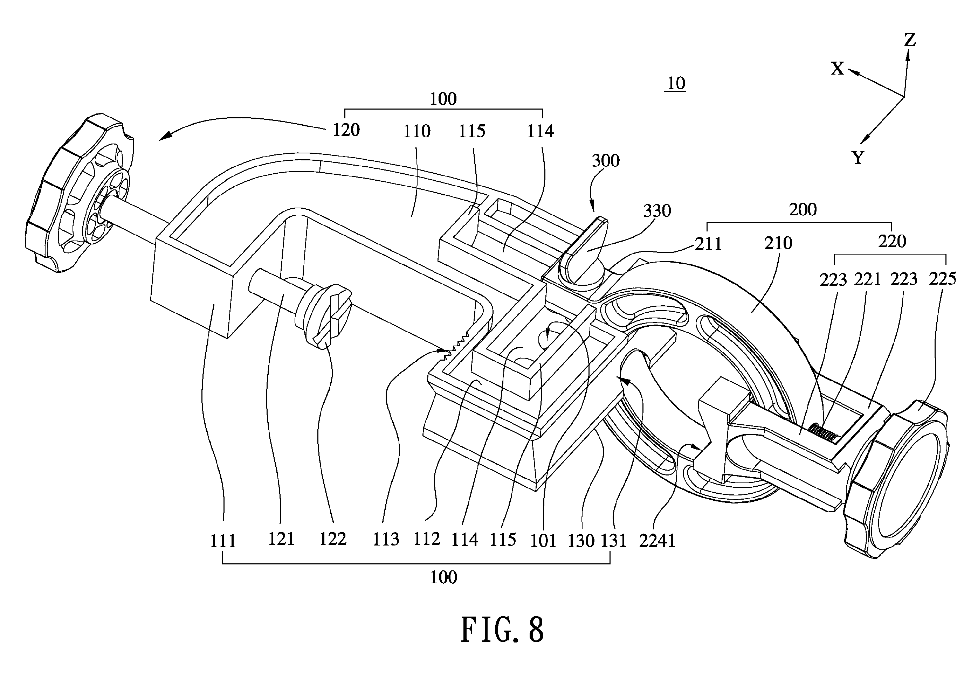

Please refer to FIG.1 and FIG.8. FIG.8 is a diagram of a second mode of the fixing device 10 according to a preferred embodiment of the present invention. The first buckling assembly 100 and the second buckling assembly 200 of the fixing device 10 are substantially parallel to each other. The first connecting arm 211 and the second connecting arm 212 of the annular body 210 insert into the slots 114 on the main body 110 along X direction, and the annular body 210 is fixed on the main body 110 by the pin 300. The fixing device 10 can fix the umbrella on the handrail easily. For example, the first buckling assembly 100 is utilized to be set on the handrail, and the first fixing component 120 is adjusted to steady the fixing device 10 on the top of the handrail. Then, the central shaft of the umbrella passes through the hollow portion of the annular body 210 of the second buckling assembly 200, and the second fixing component 220 is adjusted to tightly fix the shaft.

In conclusion, the fixing device of the present invention includes the first buckling assembly and the second buckling assembly, which can be combined into different modes. The first buckling assembly and the second buckling assembly can be adjusted according to the applied object, so that the present invention has preferred convenience and application.

Those skilled in the art will readily observe that numerous modifications and alterations of the device and method may be made while retaining the teachings of the invention. Accordingly, the above disclosure should be construed as limited only by the metes and bounds of the appended claims.

## Claims

1. A fixing device for connecting a first object to a second object and for fixing relative positions of the first object and the second object, the fixing device comprising:
a first buckling assembly, the first buckling assembly comprising:
a main body;
a first arm disposed on the main body;
a second arm disposed on the main body and located at a position corresponding to the first arm, the second arm having a fixing surface; and
a first fixing component movably disposed on the first arm and corresponding to the fixing surface, the first fixing component being for buckling the first object with the fixing surface;
**characterized by** the fact the fixing device further comprises:
a plurality of first holes being formed on the main body;
a second buckling assembly, the second buckling assembly comprising:
an annular body;
a connecting arm disposed on an end of the annular body, a second hole being formed on the connecting arm and corresponding to the first holes; and
a second fixing component movably disposed on the other end of the annular body and corresponding to the main body, the second fixing component being for buckling the second object with the main body; and
a pin detachably piercing through one of the first holes and the second hole, so that the annular body is connected to the main body in a detachable manner.

2. The fixing device of claim 1, wherein the connecting arm comprises a first connecting arm and a second connecting arm, the first connecting arm is opposite to the second connecting arm, the second hole is formed on the first connecting arm and the second connecting arm, the main body is disposed between the first connecting arm and the second connecting arm.

3. The fixing device of claim 2, wherein a slot is formed on the main body, the first holes are formed inside the slot, at least one of the first connecting arm and the second connecting arm comprises a protrusion, the second hole penetrates through the protrusion, a shape of the protrusion corresponds to a shape of the slot, and the protrusion is accommodated inside the slot.

4. The fixing device of claim 3, wherein a lateral wall is disposed on a boundary of the slot, a structural direction of the lateral wall is perpendicular to the main body.

5. The fixing device of claim 3, wherein the slot stretches along a first direction, the first holes are arranged inside the slot along the first direction.

6. The fixing device of claim 5, wherein the slot further stretches along a second direction, the first holes are arranged inside the slot along the second direction.

7. The fixing device of claim 6, wherein the first direction is perpendicular to the second direction.

8. The fixing device of claim 2, wherein the pin comprises a pillar, an engaging component is disposed on an end of the pillar, an opening is formed on a side of the second hole on the second connecting arm opposite the main body, the pillar pierces through one of the first holes and the second hole, the engaging component pierces through the opening and contacts against a boundary of the opening.

9. The fixing device of claim 8, wherein the engaging component comprises a long axle and a short axle, the opening has a first width and a second width, the first width is substantially equal to or greater than a length of the long axle, the second width is substantially equal to or greater than a length of the short axle and is smaller than the length of the long axle, two ends of the long axle of the engaging component contact against the boundary of the opening.

10. The fixing device of claim 1, wherein the first fixing component comprises a first rod and a press plank, a third hole is formed on the first arm, the first rod is movably disposed inside the third hole, the press plank is connected to the first rod and located between the first arm and the second arm, the press plank corresponds to the fixing surface.

11. The fixing device of claim 10, wherein the first rod comprises an outer thread structure, an inner thread structure is disposed inside the third hole, and the outer thread structure corresponds to the inner thread structure.

12. The fixing device of claim 1, wherein the second fixing component comprises a second rod and a press body, a fourth hole is formed on the annular body, the second rod is movably disposed inside the fourth hole, the press body is connected to the second rod, the press body corresponds to the main body.

13. The fixing device of claim 12, wherein the second rod comprises an outer thread structure, an inner thread structure is disposed inside the fourth hole, and the outer thread structure corresponds to the inner thread structure.

14. The fixing device of claim 12, wherein two press pillars are respectively disposed on two sides of the press body, a fifth hole is formed on the press body and between the two press pillars, the fifth hole aligns with the fourth hole at an axial direction, the two press pillars are disposed on two opposite sides of the annular body, the second rod pivots to the press body via the fifth hole, the main body comprises a side wall, ends of the two press pillars respectively comprise press portions facing the side wall, the press portion corresponds to the side wall.

15. The fixing device of claim 14, wherein the side wall comprises a first sunken surface, the press portion comprises a second sunken surface, the first sunken surface symmetrically corresponds to the second sunken surface.
